# EUROPEAN PATENT APPLICATION

(11) **EP 4 760 926 A1**
(43) Date of publication of application: **17.06.2026**
(21) Application number: 25861173.0
(22) Date of filing: 23.07.2025
(51) Int. Cl.: H01M 50/244, H01M 10/48, H01M 50/258, H01M 50/284, H01M 50/262, H01M 50/204

(54) **BATTERY MODULE AND BATTERY PACK INCLUDING SAME**

(30) Priority: 02.09.2024 KR 20240118820; 04.07.2025 KR 20250090055
(71) Applicant: LG Energy Solution, Ltd., Seoul 07335 (KR)
(72) Inventor: KONG, Seungjin, Daejeon 34122 (KR)
(74) Representative: BCKIP Part mbB
(86) International application number: PCT/KR2025/010903
(87) International publication number: WO 2026/049308

(57) **Abstract**

A battery module according to an embodiment of the present disclosure comprises a battery cell stack in which a plurality of battery cells are stacked; a module case that accommodates the battery cell stack therein and has an opening part formed on one surface; and a cell diagnostic assembly mounted on the module case so as to be located in the opening part, wherein the cell diagnostic assembly is coupled to the module case so that at least a part thereof is movable.

## Description

### [TECHNICAL FIELD]

### Cross Citation with Related Application(s)

This application claims priority to and the benefit of Korean Patent Application No. 10-2024-0118820, filed on September 2, 2024, and Korean Patent Application No. 10-2025-0090055, filed on July 4, 2025, the disclosures of which are incorporated herein by reference in their entirety.

The present disclosure relate to a battery module and a battery pack including the same, and more particularly, to a battery module that minimizes deformation of the cell diagnostic assembly, and a battery pack including the same.

### [BACKGROUND]

In modern society, as portable devices such as a mobile phone, a notebook computer, a camcorder and a digital camera, and energy storage system (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages of being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and an exterior case, i.e., a battery case which seals and accommodates the electrode assembly together with an electrolyte.

In general, depending on the shape of exterior cases, the lithium secondary battery may be classified into a can-type secondary battery in which the electrode assembly is incorporated into a metal can, and a pouch-type secondary battery in which the electrode assembly is incorporated into in a pouch made of an aluminum laminate sheet.

In the case of a secondary battery used for small-sized devices, two to three battery cells are disposed, but in the case of a secondary battery used for a medium- and large-sized device such as automobiles, a battery module or a battery pack in which a plurality of battery cells are electrically connected is used. In such a battery module, a plurality of battery cells are connected to each other in series or parallel to form a cell assembly, thereby improving capacity and output. One or more battery modules can be mounted together with various control and protection systems such as a BMS (battery management system), a BDU (battery disconnect unit) and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle or an energy storage system (ESS).

Meanwhile, as the secondary battery is repeatedly charged and discharged, a swelling phenomenon of the battery cell may occur. A swelling phenomenon is a phenomenon in which, while being charged and discharged repeatedly, the volume of the active materials coated on the positive and negative electrodes increases to expand the battery cell. Swelling initially occurs in each battery cell unit accommodated in the battery module, and ultimately affects the entire battery module.

A battery module may include a plurality of battery cells, a module frame in which the battery cells are accommodated, a cell diagnostic assembly mounted on the module frame, and the like. When swelling occurs in a battery cell accommodated in a module frame, the module frame and the cell diagnostic assembly mounted on the module frame may be deformed together. There is a problem that the cell diagnostic assembly is deformed and damaged by the swelling of the battery cells, so that the printed circuit board included in the cell diagnostic assembly cannot perform its original function (e.g., diagnosing the voltage and temperature of the battery cells).

Therefore, there is a need for structures that can minimize deformation of the cell diagnostic assembly mounted to the module case even if a swelling phenomenon occurs in the battery cells and the module case is deformed.

### [DETAILED DESCRIPTION OF THE INVENTION[]

### [Technical Problem]

An object of the present disclosure is to provide a battery module that minimizes deformation of the cell diagnostic assembly, and a battery pack including the same.

However, the technical objects to be solved by embodiments of the present disclosure are not limited to the above-described objects, and can be variously expanded within the scope of the technical idea included in the present disclosure.

### [Technical Solution]

In an illustrative aspect of the present disclosure, provided is a battery module, comprising: a battery cell stack in which a plurality of battery cells are stacked; a module case that accommodates the battery cell stack therein and has an opening part formed on one surface; and a cell diagnostic assembly mounted on the module case so as to be located in the opening part, wherein the cell diagnostic assembly is coupled to the module case so that at least a part thereof is movable.

In an embodiment, the cell diagnostic assembly may be coupled with the module case so as to be movable along at least one direction.

In an embodiment, the cell diagnostic assembly may be coupled with the module case so as to be movable along at least one of the width direction of the opening part and the height direction of the module case, and the width direction of the opening part may be the same as the direction of swelling that occurs in the battery cell.

In an embodiment, the cell diagnostic assembly may be coupled with the module case so as to be movable at a portion adjacent to one side edge of the opening part along the width direction of the opening part, and may be fixedly coupled to the module case at a portion adjacent to the other side edge of the opening part along the width direction of the opening part.

In an embodiment, the module case comprises a first coupling hole formed in a portion adjacent to one side edge of the opening part along the width direction of the opening part, and a second coupling hole formed in a portion adjacent to the other side edge of the opening part along the width direction of the opening part, the cell diagnostic assembly comprises a first coupling part and a second coupling part that are coupled with each of the first coupling hole and the second coupling hole, and the first coupling hole may be in the form of a slot hole.

In an embodiment, the first coupling hole and the second coupling hole may be located in the central area in the longitudinal direction of the module case on one surface of the module case where the opening part is formed.

In an embodiment, the first coupling part may be coupled to the first coupling hole so as to be movable along the extension direction of the first coupling hole, and the second coupling part may be fixedly coupled to the second coupling hole.

In an embodiment, the first coupling hole may be formed to extend along the width direction, and the second coupling part may be fixedly coupled to the second coupling hole by a thermal fusion method.

In an embodiment, the first coupling part comprises: a first body part having a circular cylindrical shape that extends along the height direction of the cell diagnostic assembly and is inserted into the first coupling hole; and a first head part that is formed on the upper part of the first body part so as to be in contact with the first body part, wherein the extension length of the first coupling hole may be longer than the diameter of the first body part.

In an embodiment, the cell diagnostic assembly may comprise: a printed circuit board; a lower housing on which the printed circuit board is seated; and an upper cover configured to cover at least a part of the printed circuit board.

In an embodiment, the lower housing may be snap-fit coupled to at least one of the module case and the upper cover.

In an embodiment, the lower housing may comprise a hook member that is hook-coupled with at least one of the module case and the upper cover.

In an embodiment, the upper cover may be coupled to the lower housing so as to be spaced apart from the hook member.

In an embodiment, the upper cover may be coupled to the lower housing so that the surface facing the printed circuit board is spaced apart from the uppermost end of the hook member.

In an embodiment, the hook member may be formed in plural numbers, and the plurality of hook members may be disposed along the periphery of the lower housing.

In an embodiment, a part of the plurality of hook members may be formed on both sides in the longitudinal direction of the lower housing, and other parts of the plurality of hook members may be formed on both sides in the width direction of the lower housing.

In an embodiment, the printed circuit board may be configured to diagnose at least one of the voltage and temperature of the battery cell.

In an embodiment, the plurality of battery cells may be stacked along the width direction.

In an embodiment, the module case may be formed with a venting hole through which gases and flames generated inside the battery module are discharged.

In another illustrative aspect of the present disclosure, provided is a battery pack comprising: the above-mentioned battery module; and a pack case in which the battery module is packaged.

### [Advantageous Effects]

According to specific embodiments of the present disclosure, the cell diagnostic assembly is coupled to the module case so as to be movable, and therefore, even if the module case is deformed by the swelling of the battery cells, deformation of the cell diagnostic assembly is minimized, so that the printed circuit board included in the cell diagnostic assembly can normally perform its functions, such as diagnosing the voltage and temperature of the battery cells.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view of a battery module according to an embodiment of the present disclosure.
FIG. 2 is an exploded perspective view of a battery module according to an embodiment of the present disclosure.
FIG. 3 is a plan view and a partially enlarged view of a cell diagnostic assembly mounted on a top plate according to an embodiment of the present disclosure, with the upper cover being removed.
FIG. 4 is a cross-sectional view taken along line A-A' of FIG. 3.
FIG. 5 is a cross-sectional view taken along line B-B' of FIG. 3.
FIG. 6 is a cross-sectional view and a partially enlarged view taken along line C-C' of FIG. 3.
FIG. 7 is a side view of the cell diagnostic assembly and the top plate according to an embodiment of the present disclosure, showing the initial state and the state in which the top plate is deformed due to swelling of the battery cell.
FIG. 8 is a plan view of the top plate according to an embodiment of the present disclosure, showing the direction in which the top plate expands and deforms due to swelling of the battery cell.
FIG. 9 is a plan view showing a state in which the upper cover is removed in a cell diagnostic assembly mounted on a top plate according to an embodiment of the present invention, which is a diagram for explaining the width direction movement of the cell diagnostic assembly.
FIG. 10 is a cross-sectional view taken along line B-B' of FIG. 3, which is a diagram for explaining the height direction movement of the cell diagnostic assembly.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Meanwhile, although terms representing directions such as upward, downward, left, right, forward, and backward are used in the present embodiment, it would be obvious to those skilled in the art that these terms are only for convenience of explanation and may vary depending on the location of the target object or the location of the observer.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Before describing the battery module 100 according to the present disclosure, the longitudinal direction of the battery module 100, module case 110, opening part 221, and cell diagnostic assembly 120, and the like refers to the X-axis direction in the drawings. The width direction of the battery module 100, module case 110, opening 221, cell diagnostic assembly 120, and the like refers to the Y-axis direction in the drawings. The height direction of the battery module 100, module case 110, cell diagnostic assembly 120, and the like refers to the Z-axis direction in the drawings.

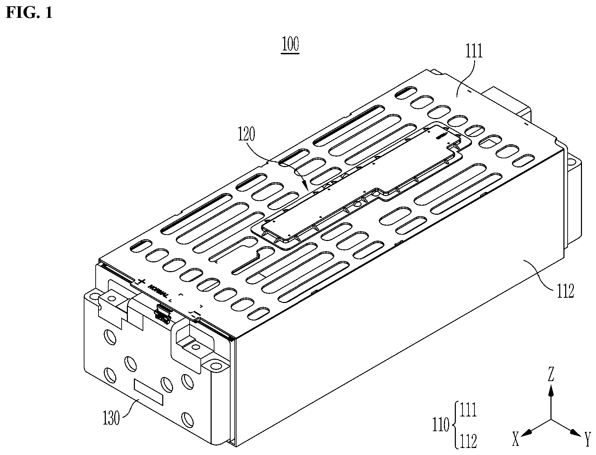

Below, a battery module 100 according to an embodiment of the present disclosure will be described with reference to FIGS. 1 to 6.

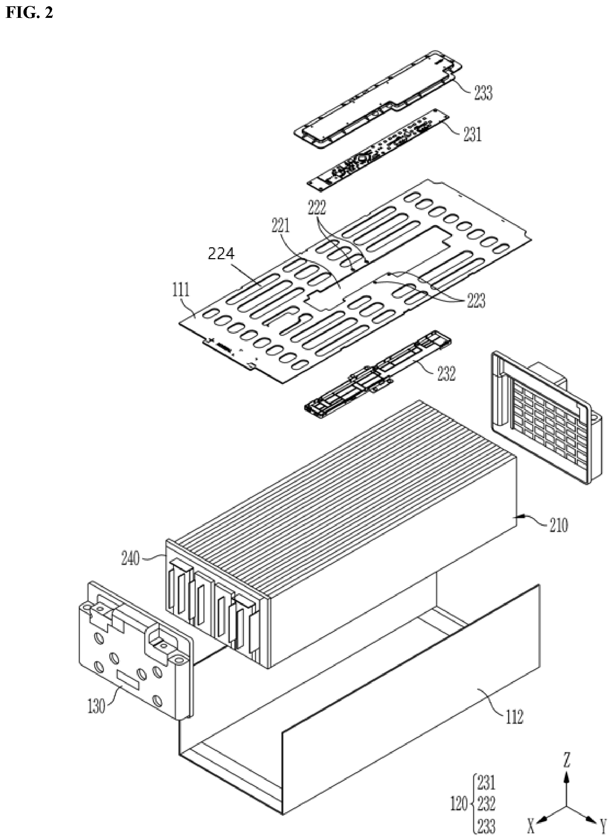

Referring to FIGS. 1 and 2, the battery module 100 may include a battery cell stack 210, a module case 110, a cell diagnostic assembly 120, an end plate 130, and a busbar frame 240.

The module case 110 may include a top plate 111, an opening part 221, a first coupling hole 222, a second coupling hole 223, and a U-shaped frame 112. The U-shaped frame 112 may include a bottom plate on which the battery cell stack 210 is seated, and side surface plates that are protrusively formed in both edges of the bottom plate. The both ends of the bottom plate may be portions that face each other in the width direction of the battery module.

The cell diagnostic assembly 120 may include a printed circuit board 231, a lower housing 232, an upper cover 233, a first coupling part 310, a second coupling part 320, and a hook member 330.

A battery module 100 according to an embodiment of the present disclosure includes a battery cell stack 210 in which a plurality of battery cells are stacked. The battery cell stack 210 is accommodated inside the module case 110. If the module case 110 may have a structure including a top plate 111 and a U-shaped frame 112, it may be a structure in which the battery cell stack 210 is inserted into the U-shaped frame 112, and the top plate 111 covers the open top surface. The battery cell stack 210 may be stacked along the width direction of the battery module 100. In this case, the width direction of the battery module 100 may be the same as the direction of swelling that occurs in the battery cells.

The module case 110 is configured to accommodate the battery cell stack 210 therein. An opening part 221 is formed on one surface of the module case 110, i.e., the top plate 111. The cell diagnostic assembly 120 is mounted on the top plate 111 so as to be located in the opening part 221. The top plate 111 may include a first coupling hole 222 formed in a portion adjacent to one side edge of the opening part 221 along the width direction of the opening part 221 and a second coupling hole 223 formed in a portion adjacent to the other side edge of the opening part 221 along the width direction of the opening part 221. The opening part 221, the first coupling hole 222, and the second coupling hole 223 may be formed on the top plate 111.

The module case 110 may be formed with a venting hole 224. The venting hole 224 may be formed in the top plate 111 of the module case 110. On the top plate 111, a venting hole 224 may be formed in an area other than the area where the opening part 221, the first coupling hole 222, and the second coupling hole 223 are formed. The venting holes 224 may be in plural numbers. The plurality of venting holes 224 may be disposed to be spaced apart from each other along the longitudinal direction and the width direction of the battery module 100. At least a part of the plurality of venting holes 224 may be configured to extend long along the longitudinal direction of the battery module 100. Gases or flames generated inside the battery module 100 may be discharged to the outside through the venting holes 224. This makes it possible to prevent damage to components inside the battery module 100 caused by gas or flames or to prevent thermal runaway phenomena from occurring inside the battery module 100.

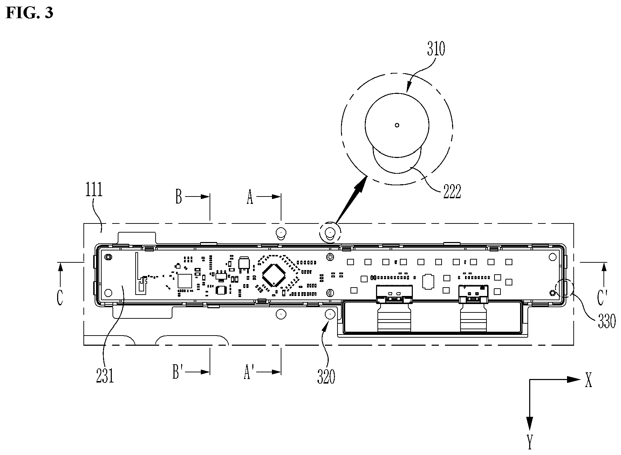

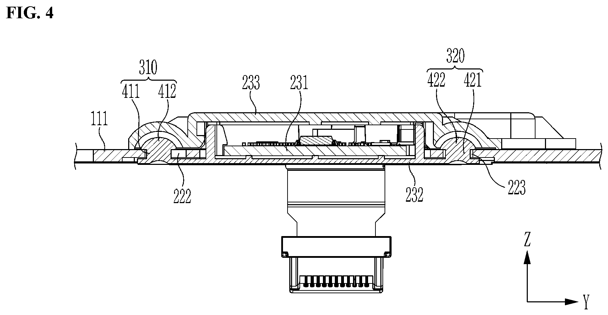

Referring to FIG. 3, the first coupling part 310 and the second coupling part 320 of the cell diagnostic assembly 120 are coupled to each of the first coupling hole 222 and the second coupling hole 223 of the module case 110, so that the cell diagnostic assembly 120 may be mounted on the module case 110. The first coupling hole 222 may be in the form of a slot hole. Here, the slot hole refers to an elongated hole extending in one direction, i.e., a hole hat is not circular but has a length in one direction. The first coupling hole 222 may be in the form of a slot hole that extends along the width direction of the module case 110 (the Y-axis direction in FIG. 3), and has a width along the longitudinal direction of the module case 110 (the X-axis direction in FIG. 3) and a length along the width direction of the module case 110 (the Y-axis direction in FIG. 3). As will be described below, the first coupling part 310 may include a first body part 411 and a first head part 412 (see FIG. 4), and the first body part 411 having a circular cylindrical shape may be inserted into the first coupling hole 222, thereby coupling the first coupling hole 222 and the first coupling part 310. In this case, the extension of the first coupling hole 222 along the width direction of the module case 110 is longer than the diameter of the first body part 411, so that the first body part 411 can be moved in the width direction of the module case 110, and consequently, the cell diagnostic assembly 120 may move along the width direction of the module case 110. Further, the battery cell stack 210 may be stacked along the width direction of the module case 110, which is the extension direction of the first coupling hole 222, so that the swelling direction of the battery cells may be the same as the extension direction of the first coupling hole 222 and the width direction of the module case 110. In this case, since the cell diagnostic assembly 120 can move in the same direction as the swelling direction of the battery cells by the first coupling hole 222, thereby effectively suppressing deformation of the cell diagnostic assembly 120 due to swelling of the battery cells and deformation of the module case 110.

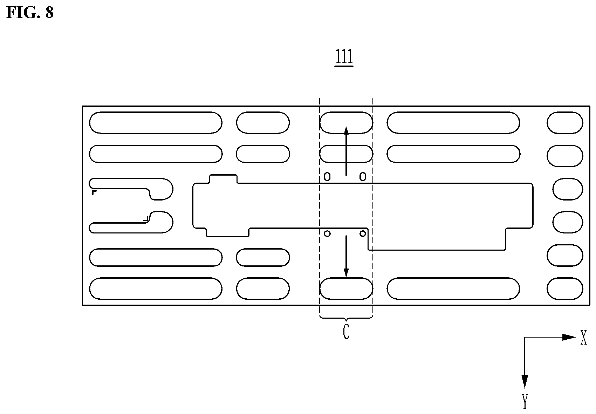

As shown in FIG. 2, the first coupling hole 222 and the second coupling hole 223 may be formed in portions adjacent to both side edges of the opening part 221 along the width direction of the opening part 221. The first coupling hole 222 and the second coupling hole 223 may be located in the central area in the longitudinal direction of the module case 110 (see C in FIG. 8) on one surface of the module case 110 (e.g., the top plate 111 where the opening part 221 is formed. Here, the "central area" refers to an area near the midpoint along the longitudinal direction of the module case 110, i.e., an area extending from the midpoint along the longitudinal direction of the module case 110 to points spaced at a prescribed distance on both sides in the longitudinal direction. To package the battery cell stack 210 inside the module case 110, the top plate 111 may be fixed by four-sided welding at four edges corresponding to the side plates and end plates of the U-shaped frame 112. Since the top plate 111 may have a shape that extends long along the longitudinal direction of the module case 110, so that the central area of the top plate 111 along the longitudinal direction of the module case 110 swells the most when the battery cells swell. In the present disclosure, the first coupling hole 222, which enables the cell diagnostic assembly 120 to move, is located in the central area in the longitudinal direction of the module case 110, thereby effectively suppressing deformation of the cell diagnostic assembly 120 due to the swelling of the battery cells.

Further, since the top plate 111 and the U-shaped frame 112 of the module case 110, which accommodates the battery cell stack 210, are weld-fixed together, so that the rigidity of the module case 110 can partially suppress expansion due to swelling of the battery cells. In addition, the cell diagnostic assembly 120 is coupled to the module case 110 in a movable manner, and therefore, even if the module case 110 is deformed due to swelling of the battery cells, the cell diagnostic assembly 120 will not be deformed or damaged. In other words, the rigidity of the module case 110 can partially suppress expansion due to swelling of the battery cells, and even if the module case 110 is deformed due to swelling of the battery cells, the cell diagnostic assembly 120 will not deform along with the module case 110 but will be able to perform its original function.

The cell diagnostic assembly 120 includes a printed circuit board 231. The printed circuit board 231 may diagnose the status (e.g., voltage, temperature, etc.) of the battery cell. The cell diagnostic assembly 120 is mounted on the module case 110 so as to be located in the opening part 221. The cell diagnostic assembly 120 is coupled to the module case 110 so that at least a part thereof is movable. The cell diagnostic assembly 120 is coupled to the module case 110 so as to be movable along at least one direction. The cell diagnostic assembly 120 may be coupled to the module case 110 so as to be movable along at least one of the width direction of the opening part 221 and the height direction of the module case 110.

The cell diagnostic assembly 120 is coupled to the module case 110 so as to be movable at a portion adjacent to one side edge of the opening part 221 along the width direction of the opening part 221, and may be fixedly coupled to the module case 110 at a portion adjacent to the other side edge of the opening part 221 along the width direction of the opening part 221. For this purpose, the cell diagnostic assembly 120 may include a first coupling part 310 and a second coupling part 320 that are coupled to each of the first coupling hole 222 and the second coupling hole 223 of the module case 110. The first coupling part 310 and the second coupling part 320 may be formed in positions corresponding to the first coupling hole 222 and the second coupling hole 223. If the first coupling hole 222 and the second coupling hole 223 are formed in portions adjacent to both side edges along the width direction of the opening 221 so as to be located in the central area in the longitudinal direction of the module case 110 (see section C in FIG. 8) on one surface of the module case 110 where the opening part 221 is formed, the first coupling part 310 and the second coupling part 320 may be formed in positions corresponding thereto.

As described above, the first coupling hole 222 may be in the form of a slot hole, and the first coupling part 310 may be coupled to the first coupling hole 222 so as to be movable along the extension direction (e.g., width direction) of the first coupling hole 222. Thereby, even when the module case 110 is deformed due to swelling of the battery cells, the cell diagnostic assembly 120 can move in the width direction, thereby minimizing deformation of the cell diagnostic assembly 120.

The second coupling part 320 may be fixedly coupled to the second coupling hole 223. The second coupling part 320 may be fixedly coupled to the second coupling hole 223 by thermal fusion or the like. The second coupling part 320 and the second coupling hole 223 are coupled with each other to fix the position of the cell diagnostic assembly 120. That is, rather than all portions of the cell diagnostic assembly 120 being movably coupled to the module case 110, the portion where the second coupling part 320 is formed is fixed to the module case 110 and maintains its position, and only the portion where the first coupling part 310 and the hook member 330 (described below) are formed may be coupled to the module case 110 so as to be movable. Thereby, even while maintaining the position of the cell diagnostic assembly 120 relative to the module case 110, the cell diagnostic assembly 120 may not be deformed or damaged even if the module case 110 is deformed due to swelling of the battery cells.

Referring to FIG. 4, the first coupling part 310 and the second coupling part 320 may be formed to extend along the height direction of the cell diagnostic assembly 120. The first coupling part 310 may include a first body part 411 and a first head part 412. The second coupling part 320 may include a second body part 421 and a second head part 422.

The first body part 411 may be formed to extend along the height direction of the cell diagnostic assembly 120. The first body part 411 may be formed to protrude upward from the bottom surface of the lower housing 232. The first body part 411 may have a circular cylindrical shape. If the first coupling hole 222 is in the form of an elongated slot hole having a width and a length (see FIG. 3, etc.), the diameter of the first body part 411 is smaller than the width of the first coupling hole 222 or is the same as the width of the first coupling hole 222 and is smaller than the length of the first coupling hole 222. Thereby, the first body part 411 may be inserted into the first coupling hole 222, so that the first coupling part 310 and the first coupling hole 222 may be coupled, and the first coupling part 310 can move along the longitudinal direction (extension direction) of the first coupling hole 222. The first head part 412 may be formed on the upper part of the first body part 411 so as to be in contact with the first body part 411. To prevent the first coupling part 310 from being separated from the first coupling hole 222, the first head part 412 is formed to have a diameter larger than the width of the first coupling hole 222.

The second body part 421 may be formed to extend along the height direction of the cell diagnostic assembly 120. The second body part 421 may be formed to protrude upward from the bottom surface of the lower housing 232. The second body part 421 may have a circular cylindrical shape. The diameter of the second body part 421 is smaller than the diameter of the second coupling hole 223 or is the same as the diameter of the second coupling hole 223. Thereby, the second body part 421 may be inserted into the second coupling hole 223, thereby coupling the second coupling part 320 and the second coupling hole 223. The second head part 422 may be formed on the upper part of the second body part 421 so as to be in contact with the second body part 421. To prevent the second coupling part 320 from being separated from the second coupling hole 223, the second head part 422 is formed to have a diameter larger than the width of the second coupling hole 223.

The cell diagnostic assembly 120 may include a printed circuit board 231, a lower housing 232, and an upper cover 233. That is, the cell diagnostic assembly 120 is not simply a single board, but rather a configuration having a height corresponding to the height of the battery module 100, which may be configured to diagnose the voltage and temperature of battery cells and communicate with an external BMS (Battery Management System). The printed circuit board 231 may be a CSC (Cell Supervision Circuit) printed circuit board that diagnoses the status of battery cells (e.g., voltage, temperature, etc.), but is not limited thereto, and various types of printed circuit boards may be applied.

The printed circuit board 231 may be seated on the lower housing 232. The printed circuit board 231 may be seated on the lower housing 232 so that its lower surface is in contact with the lower housing 232. The upper cover 233 may be configured to cover at least a part of the printed circuit board 231. The upper cover 233 may be configured to cover the upper surface of the printed circuit board 231. The lower housing 232 may be snap-fit coupled with the module case 110 and/or the upper cover 233. For this purpose, the lower housing 232 may include a hook member 330 that is hook-coupled with the module case 110 and/or the upper cover 233. In this case, the upper cover 233 may be coupled to the lower housing 232 so as to be spaced apart from the hook member 330. The upper cover 233 may be coupled to the lower housing 232 so that the surface facing the printed circuit board 231 is spaced upward from the uppermost end of the hook member 330.

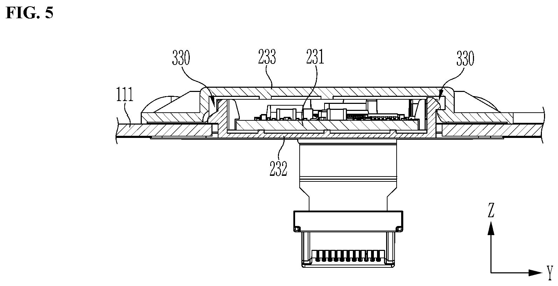

Referring to FIG. 5, the lower housing 232 may be snap-fit coupled to the module case 110 and/or the upper cover 233. At this time, the upper cover 233 and the lower housing 232 are coupled so that the surface of the upper cover 233 facing the printed circuit board 231 is spaced upward from the uppermost end of the hook member 330, and therefore, even if the module case 110 is deformed due to swelling of the battery cells, the cell diagnostic assembly 120 is not deformed. This is because the lower housing 232 on which the printed circuit board 231 is seated can move in the vertical direction. As a result, deformation of the printed circuit board 231 due to swelling of the battery cells and deformation of the module case 110 is minimized, so that the voltage, temperature, etc. of the battery cells can be measured until the end of life (EOL) of the battery module 100.

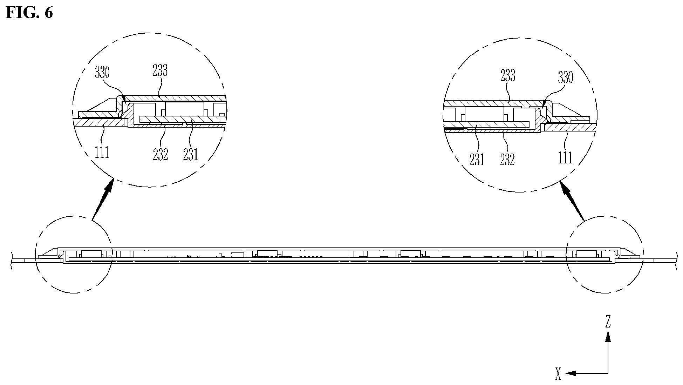

The hook member 330 may be formed in plural numbers. The plurality of hook members 330 may be disposed along the periphery of the lower housing 232. Referring to FIG. 6, a part of the plurality of hook members 330 may be formed on both sides in the longitudinal direction of the lower housing 232. Other parts of the plurality of hook members 330 may be formed on both sides in the width direction of the lower housing 232.

As described above, the first coupling hole 222 and the second coupling hole 223 are formed in portions adjacent to both side edges of the opening part 221 along the width direction of the opening part 221 so as to be located in the central area in the longitudinal direction of the module case 110 on one surface of the module case 110 where the opening part 221 is formed, and when the first coupling part 310 and the second coupling part 320 that are respectively coupled to these are formed in positions corresponding thereto, the plurality of hook members 330 may be formed in an area other than the area where the first coupling part 310 and the second coupling part 320 are formed.

Along the circumferential direction of the lower housing 232, a first coupling part 310 and a second coupling part 320 are formed on both sides of the central area in the longitudinal direction of the module case 110, and a hook member 330 is formed in the other area, so that the cell diagnostic assembly 120 is movable in the width direction and the height direction even while the cell diagnostic assembly 120 and the module case 110 are firmly coupled.

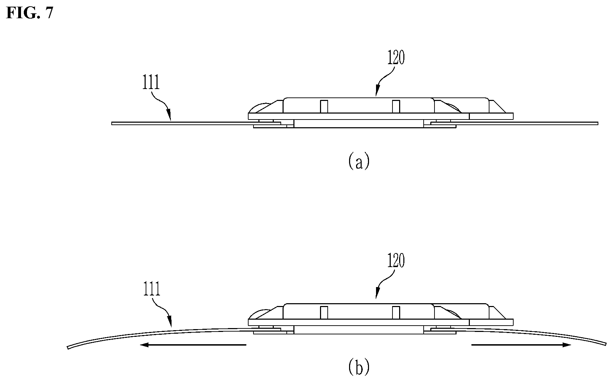

FIG. 7 is a side view of the cell diagnostic assembly and the top plate according to an embodiment of the present disclosure, showing the initial state and the state in which the top plate is deformed due to swelling of the battery cell.

FIG. 8 is a plan view of the top plate according to an embodiment of the present disclosure, showing the direction in which the top plate expands and deforms due to swelling of the battery cell.

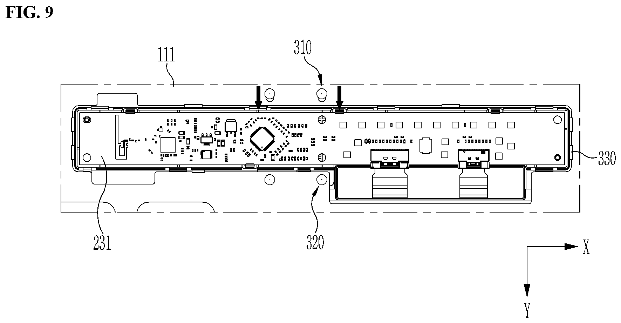

FIG. 9 is a plan view showing a state in which the upper cover is removed in a cell diagnostic assembly mounted on a top plate according to an embodiment of the present invention, which is a diagram for explaining the width direction movement of the cell diagnostic assembly.

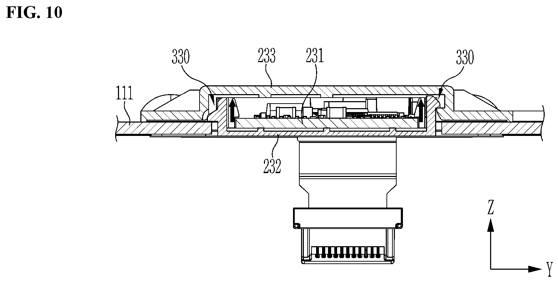

FIG. 10 is a cross-sectional view taken along line B-B' of FIG. 3, which is a diagram for explaining the height direction movement of the cell diagnostic assembly.

Deformation of the module case 110 and movement of the cell diagnostic assembly 120 according to an embodiment of the present disclosure will be described in detail with reference to FIGS. 7 to 10.

The module case 110 may be deformed by the swelling of the plurality of battery cells accommodated in the module case 110. For example, when the plurality of battery cells are stacked along the width direction of the battery module 100 (see FIG. 2), the top plate 111 to which the cell diagnostic assembly 120 is mounted may expand in the width direction due to the swelling of the battery cells (see FIGS. 7 and 8). In addition, the expanded battery cells may push up the top plate 111, thereby expanding and deforming it so as to be bent upward (see FIG. 7(b)). That is, due to the swelling of the battery cells, the top plate 111 on which the cell diagnostic assembly 120 is mounted may be deformed in the width direction, height direction, and other directions.

At this time, in conventional battery modules, the cell diagnostic assembly is fixedly coupled to the upper surface of the module case, etc., and deforms along with the module case, which may damage the printed circuit board and prevent it from exerting its original function.

In contrast, in the battery module 100 according to the present disclosure, the cell diagnostic assembly 120 is coupled to the module case 110 so that it can move in at least one direction, and therefore, even when the module case 110 deforms due to swelling of the battery cells, deformation of the cell diagnostic assembly 120 can be minimized.

More specifically, referring to FIGS. 9 and 10, when the top plate 111 on which the cell diagnostic assembly 120 is mounted deforms in the width and height directions due to swelling of the battery cells, the cell diagnostic assembly 120 can move in the width direction by the first coupling hole 222, which is a slot-shaped hole extending in the width direction (see FIG. 9). The upper cover 233 covering the printed circuit board 231 is located upward from the uppermost end of the hook member 330 of the lower housing 232, so that the cell diagnostic assembly 120 can move in the height direction. As a result, even if the module case 110 is deformed due to swelling of the battery cells, the cell diagnostic assembly 120 mounted to the module case 110 is not deformed or deformation is minimized. The printed circuit board 231 can performer its original function until the end of the life of the battery module 100.

One or more battery modules according to an embodiment of the present invention may be packaged inside a pack case to form a battery pack.

The battery module and the battery pack including the same as previously mentioned may be applied to various devices. Specifically, such devices can be applied to transportation vehicles such as an electric bike, an electric vehicle, and a hybrid electric vehicle. However, the present disclosure is not limited thereto, and can be applied to various devices capable of using a battery module and a battery pack including the same, which also falls within the scope of the present disclosure.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery module
110: module case
111: top plate
112: U-frame
120: cell diagnostic assembly
130: end plate
210: battery cell stack
221: opening part
222: first coupling hole
223: second coupling hole
224: venting hole
231: printed circuit board (PCB)
232: lower housing
233: upper cover
240: busbar frame
310: first coupling part
320: second coupling part
330: hook member
411: first body part
412: first head part
421: second body part
422: second head part

## Claims

1. A battery module, comprising:
a battery cell stack in which a plurality of battery cells are stacked;
a module case that accommodates the battery cell stack therein and has an opening part formed on one surface; and
a cell diagnostic assembly mounted on the module case so as to be located in the opening part,
wherein the cell diagnostic assembly is coupled to the module case so that at least a part thereof is movable.

2. The battery module according to claim 1,
wherein the cell diagnostic assembly is coupled with the module case so as to be movable along at least one direction.

3. The battery module according to claim 2,
wherein the cell diagnostic assembly is coupled with the module case so as to be movable along at least one of a width direction of the opening part and a height direction of the module case, and
the width direction of the opening part is the same as a direction of swelling that occurs in the battery cell.

4. The battery module according to claim 2,
wherein the cell diagnostic assembly is coupled with the module case so as to be movable at a portion adjacent to one side edge of the opening part along a width direction of the opening part, and is fixedly coupled to the module case at a portion adjacent to another side edge of the opening part along the width direction of the opening part.

5. The battery module according to claim 2,
wherein the module case comprises a first coupling hole formed in a portion adjacent to one side edge of the opening part along a width direction of the opening part, and a second coupling hole formed in a portion adjacent to an other side edge of the opening part along the width direction of the opening part,
the cell diagnostic assembly comprises a first coupling part and a second coupling part that are coupled with each of the first coupling hole and the second coupling hole, and
the first coupling hole is in the form of a slot hole.

6. The battery module according to claim 5,
wherein the first coupling hole and the second coupling hole are located in a central area in a longitudinal direction of the module case on one surface of the module case where the opening part is formed.

7. The battery module according to claim 5,
wherein the first coupling part is coupled to the first coupling hole so as to be movable along an extension direction of the first coupling hole, and
the second coupling part is fixedly coupled to the second coupling hole.

8. The battery module according to claim 7,
wherein the first coupling hole is formed to extend along the width direction, and
the second coupling part is fixedly coupled to the second coupling hole by a thermal fusion method.

9. The battery module according to claim 5,
wherein the first coupling part comprises:
a first body part having a circular cylindrical shape that extends along the height direction of the cell diagnostic assembly and is inserted into the first coupling hole; and
a first head part that is formed on the upper part of the first body part so as to be in contact with the first body part,
wherein an extension length of the first coupling hole is longer than the diameter of the first body part.

10. The battery module according to claim 1,
wherein the cell diagnostic assembly comprises:
a printed circuit board;
a lower housing on which the printed circuit board is seated; and
an upper cover configured to cover at least a part of the printed circuit board.

11. The battery module according to claim 10,
wherein the lower housing is snap-fit coupled to at least one of the module case and the upper cover.

12. The battery module according to claim 10,
wherein the lower housing comprises a hook member that is hook-coupled with at least one of the module case and the upper cover.

13. The battery module according to claim 12,
wherein the upper cover is coupled to the lower housing so as to be spaced apart from the hook member.

14. The battery module according to claim 13,
wherein the upper cover is coupled to the lower housing so that the surface facing the printed circuit board is spaced apart from the uppermost end of the hook member.

15. The battery module according to claim 12,
wherein the hook member is formed in plural numbers, and the plurality of hook members are disposed along the periphery of the lower housing.

16. The battery module according to claim 15,
wherein a part of the plurality of hook members are formed on both sides in the longitudinal direction of the lower housing, and
other parts of the plurality of hook members are formed on both sides in the width direction of the lower housing.

17. The battery module according to claim 10,
wherein the printed circuit board is configured to diagnose at least one of the voltage and temperature of the battery cell.

18. The battery module according to claim 3,
wherein the plurality of battery cells are stacked along the width direction.

19. The battery module according to claim 1,
wherein the module case is formed with a venting hole through which gases and flames generated inside the battery module are discharged.

20. A battery pack comprising:
a battery module according to any one of claims 1 to 19; and
a pack case in which the battery module is packaged.
